# EUROPÄISCHE PATENTSCHRIFT

(11) **EP 3 137 686 B1**
(45) Veröffentlichungstag und Bekanntmachung des Hinweises auf die Patenterteilung: **14.03.2018**
(21) Anmeldenummer: 15736166.8
(22) Anmeldetag: 29.04.2015
(51) Int. Cl.: E01F 9/619, A01M 29/08

(54) **VORRICHTUNG ZUM ABSTRAHLEN VON LICHT**
DEVICE FOR EMITTING LIGHT
DISPOSITIF SERVANT À ÉMETTRE UNE LUMIÈRE

(30) Priorität: 29.04.2014 AT 3122014
(43) Veröffentlichungstag der Anmeldung: 08.03.2017
(73) Patentinhaber: Diethart, Franz Josef, 8225 Poellau bei Hartberg (AT)
(72) Erfinder: Diethart, Franz Josef, 8225 Poellau bei Hartberg (AT)
(74) Vertreter: Ellmeyer, Wolfgang
(86) Internationale Anmeldenummer: PCT/AT2015/050106
(87) Internationale Veröffentlichungsnummer: WO 2015/164899

(56) Entgegenhaltungen:
- DE-A1- 3 223 363
- DE-U1- 20 009 989
- DE-U1- 20 216 057
- DE-U1-202010 005 152
- DE-U1-202011 108 278

## Beschreibung

Die Erfindung betrifft eine Vorrichtung zum Abstrahlen von Licht zur Abschreckung von Tieren, mit einem Gehäuse, das mindestens ein Lichteinlasselement umfasst, durch welches Licht in einer Eintrittsrichtung von außen in das Gehäuse eintreten kann, und mindestens einem Lichtabstrahlelement, durch welches Licht vom Gehäuses in einer Abstrahlrichtung abgestrahlt werden kann, wobei die Abstrahlrichtung vom Gehäuse weg weist und nur quer zur Eintrittsrichtung ist.

### STAND DER TECHNIK

Vorrichtungen zum Abschrecken von Tieren, auch Tierabschreckvorrichtung genannt, wie sie z.B. in der DE 32 23 363 A1 und in der DE 196 13 197 A1 beschrieben sind, sollen Zusammenstöße von Tieren bzw. Wild mit Fahrzeugen im Nachtverkehr vermeiden helfen, um das Leben von Menschen und Wildtieren zu schützen. Diese Vorrichtungen nutzen von den Fahrzeugen abgestrahltes Licht, um Licht in den Raum neben der Fahrbahn bzw. Straße zu emittieren. Dies soll die sich dort aufhaltenden Tiere davon abhalten, auf die Fahrbahn zu treten, wenn sich Fahrzeuge nähern.

Weiters sind aus der DE 202010005152 U1 Mildwarnreflektoren bekannt, bei denen bläuliche Reflexionsfolien an Leitpflöcken neben der Fahrbahn zur Anwendung gelangen, die das Licht der Scheinwerfer in den Straßengraben reflektierten, um dort verstecktes Wild vom Betreten der Fahrbahn abzuhalten. Allerdings kann es bei dieser bekannten Lösung in der Praxis dazu kommen, dass eine Reflexion in den Raum neben der Straße nicht zuverlässig erfolgt. Dies kann sogar soweit gehen, dass Licht nicht in den Raum neben der Straße reflektiert wird, sondern der Fahrer selbst vom bläulich reflektierten Licht getroffen wird, was zur Irritation des Fahrers führten kann. Es hat sich auch gezeigt, dass die reflektierenden Folien eine sehr diffuse Abstrahlung des bläulichen Lichtes mit geringer Intensität ergeben, die keine stark abschreckende Wirkung auf das Wild hat.

### AUFGABE DER ERFINDUNG

Es ist daher Aufgabe der vorliegenden Erfindung, die oben genannten Nachteile zu vermeiden. Insbesondere soll sichergestellt werden, dass Licht zuverlässig in den Raum neben der Straße bzw. Fahrbahn emittiert wird, um Tiere bzw. Mild abzuschrecken.

### GARSTELLUNG DER ERFINDUNG

Der Erfindung liegt die Idee zugrunde, eine zuverlässige Abstrahlung von Licht in den Raum neben der Fahrbahn bzw. Straße nicht durch Reflexion von Licht eines Schweinwerfers eines Fahrzeuges zu realisieren, sondern durch ein lumineszierendes Element, der durch das Licht eines Fahrzeugscheinwerfers angeregt wird, um im Wesentlichen blaues Licht, für welches das Wild eine hohe Empfindlichkeit hat, in Form eines intensiven und gerichteten Lichtstrahls abzustrahlen, wobei das angeregte Licht bevorzugt eine Zeit lang nachleuchtet, um einen entsprechenden anhaltenden Effekt in der Dunkelheit zu erzielen. Da das lumineszierende Element seine Position relativ zur Straße bzw. zum Raum neben der Straße, in welchem sich die abzuschreckende Tiere potentiell aufhalten, nicht ändert, ist gewährleistet, dass das vom lumineszierenden Körper abgestrahlte Licht stets in der richtigen Richtung bzw. in den richtigen Raumbereich abgestrahlt wird. Eine Abstrahlung in eine falsche Richtung bzw. in einen falschen Raumbereich, wie etwa zurück auf die Fahrbahn oder zurück zum sich nähernden Fahrzeug kann somit ausgeschlossen werden.

Daher ist es bei einer Vorrichtung der eingangs genannten Art erfindungsgemäß vorgesehen, dass das mindestens eine Lichtabstrahlelement ein lumineszierendes Element umfasst, das durch Licht, das durch das mindestens eine Lichteinlasselement in das Gehäuse eintritt, zur Abstrahlung von Licht in Abstrahlrichtung anregbar ist, und dass das lumineszierende Element aus einem im Wesentlichen blau emittierenden Lumineszenzmaterial gebildet ist. "Außen" bedeutet dabei außerhalb des Gehäuses. Die Abstrahlrichtung ist stets quer, d.h. niemals parallel, zur Eintrittsrichtung, Vorzugsweise ändert sich bei ortsfester Aufstellung der Vorrichtung die Abstrahlrichtung eines lumineszierenden Elements nicht.

Das erfindungsgemäß vorgesehene lumineszierende Element wird vom Scheinwerferlicht angeregt und emittiert im Wesentlichen blaues Licht, für welches das Wild eine hohe Empfindlichkeit aufweist. In bevorzugter Weise kann das lumineszierende Element fluoreszierend oder phosphoreszierend ausgebildet sein und so gestaltet sein, dass es für die jeweilige Anwendung vorteilhaft ist, z.B. dass es nach dem Anregen durch Scheinwerferlicht eine Zeit lang blau nachleuchtet, um die abschreckende Wirkung zu vergrößern. Gemäß einer weiteren Ausführungsform kann zumindest eine Austrittsöffnung im Gehäuse vorgesehen sein und das lumineszierende Element kann durch eine lumineszierende Schicht ausgebildet sein, die so angeordnet ist, dass das von der lumineszierenden Schicht abgestrahlte Licht zumindest teilweise durch die zumindest eine Austrittsöffnung aus dem Gehäuse austritt.

Vorzugsweise ist das Gehäuse zumindest abschnittweise im Wesentlichen lichtundurchlässig. Das Licht, das durch das mindestens eine Lichteinlasselement in das Gehäuse eintritt, wird im Allgemeinen von einem sich nähernden Fahrzeug bzw. von dessen Scheinwerfer abgestrahlte. Dieses Licht wird vom Fahrzeug bei geradem Straßenverlauf im Wesentlichen dem Straßenverlauf folgend abgestrahlt. Abgesehen von einer kegelförmiger Aufweitung des Lichts tritt somit nur ein zu vernachlässigender Anteil des vom Fahrzeug abgestrahlten Lichts in den Raum neben der Straße.

Wenn die erfindungsgemäße Vorrichtung am Straßenrand angeordnet ist, weist das Lichteinlasselement zum sich nähernden Fahrzeug. Das durch das Lichteinlasselement in das Gehäuse eingetretene Licht trifft auf das lumineszierende Element bzw. wird über geeignete Mittel zu diesem gelenkt und regt diesen zur Abstrahlung von Licht an. Dabei ist das lumineszierende Element bzw. das Lichtabstrahlelement so angeordnet, dass das vom lumineszierenden Elementemittierte Licht in den Raum neben der Straße gerichtet ist - also im Wesentlichen quer, d.h. nicht parallel, zum Licht, das vom Fahrzeugscheinwerfer emittiert wird. Entsprechend ist im Allgemeinen das lumineszierende Element bzw. das Lichtabstrahlelement quer zum Lichteinlasselement angeordnet.

Eine einfache Möglichkeit der Realisierung einer solchen Vorrichtung besteht darin, Austrittsöffnungen im Gehäuse vorzusehen, in und/oder über welchen vorzugsweise jeweils ein lumineszierendes Element angeordnet ist. Wenn ein lumineszierendes Element über einer Austrittsöffnung angeordnet ist, so bedeutet dies, dass die Projektion dieses lumineszierenden Körpers in Richtung normal auf jene Fläche des Gehäuses, in der die jeweilige Austrittsöffnung angeordnet ist, zumindest abschnittsweise in der Austrittsöffnung angeordnet ist. Dies eröffnet vielfältige Möglichkeiten bei der Gestaltung des optischen Erscheinungsbilds der Vorrichtung. Daher ist es bei einer bevorzugten Ausführungsform der erfindungsgemäßen Vorrichtung vorgesehen, das das mindestsens eine Lichtabstrahlelement eine Austrittsöffnung im Gehäuse aufweist, in und/oder über welcher der lumineszierende Körper zumindest abschnittsweise angeordnet ist.

Insbesondere wird hierdurch die Möglichkeit geschaffen, dass die Lichtabstrahlelemente eine Ähnlichkeit zu Augen eines Tieres, vorzugsweise eines Raubtieres wie eines Fuchses, aufweisen. Auf diese Weise simuliert die erfindungsgemäße Vorrichtung das Leuchten von solchen Tieraugen, was von Wild als bedrohlich empfunden wird. Die Abschreckungswirkung auf Wild kann hierdurch erheblich erhöht werden, sodass das Wild besonders effektiv abgeschreckt wird und sich der Vorrichtung - und der Fahrbahn, neben der die Vorrichtung vorzugsweise platziert ist - nicht nähert. Um die Form solcher Tieraugen besonders gut zu limitieren, ist es bei einer bevorzugten Ausführungsform der erfindungsgemäßen Vorrichtung vorgesehen, dass die Austrittsöffnung eine Umrandungslinie aufweist, die die Form einer konkaven Linie, die mit einer konvexen Linie verschnitten ist, aufweist. Selbstverständlich sind jedoch auch andere Formen der Umrandungslinie möglich, insbesondere z.B. eine Kreis- oder Ellipsenform, die fertigungstechnisch vergleichsweise einfach herzustellen sind. Die Form der Umrandungslinie kommt besonders gut zur Geltung, wenn das/die lumineszierende/n Elemente im Gehäuse angeordnet ist/sind, da dann die Austrittsöffnung von innerhalb des Gehäuses beleuchtet wird. Das/die lumineszierende/n Elemente befindet/befinden sich in diesem Fall über der Austrittsöf-fnung.

Um den Eindruck von Raubtieraugen, insbesondere von Fuchsaugen, weiter zu verstärken und damit den Abschreckungseffekt zu maximieren, ist es bei einer bevorzugten Ausführungsform der erfindungsgemäßen Vorrichtung vorgesehen, dass mehrere Lichtabstrahlelemente vorgesehen sind, wobei jeweils zwei hichtabstrahlelemente einen relativen Abstand zueinander aufweisen, der 40 mm bis inklusive 120 mm beträgt. Hierdurch wird die Physiognomie eines Raubtiers, insbesondere eines Fuchses, im Bereich von dessen Augen bis zu einem gewissen Grad imitiert. Entsprechend sind die jeweils zwei Lichtabstrahlelemente bevorzugt paarweise angeordnet.

Um Kosten niedrig zu halten und/oder eine ungehinderte Lichtausbreitung im Gehäuse zu ermöglichen, ist es bei einer bevorzugten Ausführungsform der erfindungsgemäßen Vorrichtung vorgesehen, dass das Gehäuse einen Hohlraum umschließt. Vorzugsweise breitet sich das durch das mindestens eine Lichteinlasselement in das Gehäuse eingetretene Licht zumindest abschnittsweise im Hohlraum aus.

Alternativ oder zusätzlich kann ein transparenter Körper im Gehäuse angeordnet sein, beispielsweise ein Körper aus Glas, Plexiglas oder Acrylglas. Auch dieser ermöglicht die Ausbreitung des durch das mindestens eine Lichteinlasselement in das Gehäuse eingetretenen Lichts innerhalb des Gehäuses. Zudem kann der transparente Körper auch dazu dienen, dem Gehäuse Stabilität zu verleihen. Daher ist es bei einer bevorzugten Ausführungsform der erfindungsgemäßen Vorrichtung vorgesehen, dass das Gehäuse zumindest abschnittsweise mit einem transparenten Körper ausgefüllt ist. Zudem kann der transparente Körper auch dazu verwendet werden, die lumineszierenden Körper zu befestigen.

Um ein möglichst geschlossenes Gehäuse zu realisieren und somit das Eindringen von Schmutz und Feuchtigkeit in das Gehäuse zu vermeiden, ist es bei einer bevorzugten Ausführungsform der erfindungsgemäßen Vorrichtung vorgesehen, dass das mindestens eine Lichteinlasselement aus einem transparenten Material besteht. Beispiele für ein solches Material wären Glas, Plexiglas oder Acrylglas.

Um eine möglichst kostengünstige Vorrichtung zu realisieren, ist es bei einer weiteren bevorzugten Ausführungsform. der erfindungsgemäßen Vorrichtung vorgesehen, dass das mindestens eine Lichteinlasselement als Loch im Gehäuse ausgeführt ist.

Um Licht, das von unterschiedlichen Seiten in Richtung der Vorrichtung abgestrahlt wird, dazu verwenden zu können, lumineszierende Elemente zur Abstrahlung von Licht, vorzugsweise in den Raum neben der Straße, wo sich abzuschreckende Tiere potentiell aufhalten, anzuregen, ist es bei einer bevorzugten Ausführungsform der erfindungsgemäßen Vorrichtung vorgesehen, dass mehrere Lichteinlasselemente vorgesehen sind, wobei mindestens zwei Lichteinlasselemente einander gegenüber liegend angeordnet sind. Die gegenüberliegende Anordnung trägt insbesondere dem Anwendungsfall der Aufstellung der erfindungsgemäßen Vorrichtung neben einer Fahrbahn einer Straße Rechnung, wo Fahrzeuge sich aus entgegengesetzten Richtungen der Vorrichtung nähern können.

Um in diesem Fall auszuschließen, dass Licht, das durch ein Lichteinlasselement in das Gehäuse eingetreten ist, so zurück reflektiert wird, dass es durch dieses Lichteinlasselement wieder austritt - und damit möglicherweise den Fahrer des Fahrzeugs blende, das das Licht abgestrahlt hat - oder dass es durch das gegenüberliegende Lichteinlasselement austritt - und damit möglicherweise den Fahrer eines entgegenkommenden Fahrzeugs blendet -, ist es bei einer bevorzugten Ausführungsform der erfindungsgemäßen Vorrichtung vorgesehen, dass zwischen den einander gegenüberliegenden Lichteinlasselementen ein lichtundurchlässiges Element angeordnet ist, welches Licht im Wesentlichen nicht reflektiert. Wenn die Vorrichtung aus mehreren nebeneinander angeordneten Gehäusen besteht, kann ein solches lichtundurchlässiges Element auch aus einer Wand eines Gehäuses gebildet sein.

Ebenso kann es bei einer Ausführungsform der erfindungsgemäßen Vorrichtung mit nur einem Lichteinlasselement oder mehreren Lichteinlasselementen auf nur einer Seite des Gehäuses vorgesehen sein, dass zur Vermeidung der Blendung des Fahrers des Fahrzeugs, das das Licht abgestrahlt hat, im Gehäuse ein lichtundurchlässiges Element gegenüber dem/den Lichteinlasselement/en angeordnet ist, welches Licht im Wesentlichen nicht reflektiert.

Der Abschreckungseffekt kann weiter gesteigert werden, indem nicht sämtliche lumineszierenden Körper völlig gleich und während derselben Zeit Licht abgeben, sondern insbesondere zeitlich ein wenig versetzt. Hierdurch kann ein Eindruck von lebendigen Tieraugen erzeugt werden. Um dies zu leisten, sind Lichtsteuerelemente vorgesehen. Diese bewirken, dass Licht, das von einem sich nähernden Fahrzeug abgestrahlt wird, nicht exakt gleichzeltig sämtlichelumineszierende Elementeanregt. So regt das vom sich nähernden Fahrzeug abgestrahlte Licht, das in der Eintrittsrichtung durch das Lichteinlasselement und in das Gehäuse tritt, ein gewisses lumineszierendes Element zum Abstrahlen an. Vorzugsweise wurde das Licht dabei im Gehäuse über reflektierende Elemente zu diesem lumineszierenden Elementgeleitet oder durch andere nichtleitende Elemente, wie z.B. Kanäle, die somit als Lichtsteuerelemente fungieren. Gleichzeitig sind andere Lichtsteuerelemente vorhanden, die verhindern, dass ein anderes lumineszierendes Element ebenfalls von diesem einfallenden Licht angeregt wird. Diese Lichtsteuerelemente können z.B. als Vorsprünge im Gehäuse ausgeführt sein, die das andere lumineszierende Element gegenüber dem unter der Eintrittsrichtung einfallenden Licht beschatten.

Erst wenn sich das Fahrzeug weiter genähert hat und sich so der Winkel des eingestrahlten Lichts relativ zum Lichteinlasselement bzw. zum Gehäuse geringfügig geändert hat und das Licht nun unter einer anderen Eintrittsrichtung einfällt, gelangt das so eingestrahlte Licht auch zum anderen lumineszierendenElement, das nun seinerseits zum Abstrahlen angeregt wird. Im genannten Beispiel wird also Licht, das unter der anderen Eintrittsrichtung einfällt, durch die Vorsprünge nicht oder zumindest nicht vollständig abgeblockt und kann den anderen lumineszierenden Körper zum Abstrahlen anregen. Selbstverständlich können auch hierbei weitere Lichtsteuerelemente im Spiel sein, insbesondere reflektierende Elemente oder Kanäle, die das Licht zum anderen lumineszierenden Element leiten. Insgesamt ergibt sich somit ein zeitversetztes Aufleuchten der lumineszierenden Elemente.

Daher ist es bei einer bevorzugten Ausfuhrungsform der erfindungsgemäßen Vorrichtung vorgesehen, dass mindestens ein Lichtsteuerelement vorgesehen ist, um die Anregung des mindestens einen lumineszierendenElements durch Licht, das durch das mindestens eine Lichteinlasselement in das Gehäuse eintritt, zu steuern.

Um die Abschreckungswirkung weiter zu erhöhen, ist es bei einer bevorzugten Ausführungsform der erfindungsgemäßen Vorrichtung vorgesehen, dass auf einer Außenseite des Gehäuses Markierungen vorgesehen sind, wobei die Markierungen eine Farbe aufweisen, die sich von einer Farbe der Außenseite des Gehäuses unterscheidet.

Um die Sichtbarkeit der Markierungen zu verbessern und insbesondere auch in der Dämmerung zu gewährleisten, ist es bei einer bevorzugten Ausführungsform der erfindungsgemäßen Vorrichtung vorgesehen, dass die Markierungen eine Leuchtfarbe aufweisen.

Um den Eindruck eines Raubtieres zu steigern und damit die Abschreckungswirkung noch weiter zu erhöhen, ist es bei einer bevorzugten Ausführungsform der erfindungsgemäßen Vorrichtung vorgesehen, dass die Markierungen zusammen mit dem mindestens einen lumineszierenden Körper und vorzugsweise mit den Austrittsöffnungen ein Tiergesicht, insbesondere ein Raubtiergesicht darstellen.

Um den Eindruck eines Raubtieres noch weiter zu steigern und damit die Abschreckungswirkung noch weiter zu erhöhen, kann das Gehäuse mit einer dreidimensionalen Struktur versehen sein, die zumindest einen Teil eines Tiergesichts bzw. Raubtiergesichts, insbesondere zumindest die Schnauze des Tiergesichts bzw. Raubtiergesichts darstellt. Beispielsweise kann die dreidimensionale Struktur die Schnauze eines Fuchses darstellen. Die dreidimensionale Struktur kann dabei reliefartig in das Gehäuse eingearbeitet sein oder als separater Teil, der in das Gehäuse integriert bzw. mit diesem verbunden worden ist. Daher ist es bei einer bevorzugten Ausführungsform der erfindungsgemäßen Vorrichtung vorgesehen, dass das Gehäuse eine dreidimensionale Struktur in Form von zumindest einem Teil eines Tiergesichts, insbesondere eines Raubtiergesichts aufweist.

Eine weitere Möglichkeit, den Eindruck eines Tiergesichts zu verstärken, besteht darin, Schlitze im Gehäuse vorzugehen, durch die Licht vom Gehäuse nach außen hindurchtreten kann. Insbesondere kann durch diese Schlitze Licht, das durch das mindestens eine Lichteinlasselement eingetreten und im Gehäuse reflektiert worden ist, hindurchtreten. Die Form der Schlitze ist dabei vorzugsweise den Konturen eines Tiergesichts, insbesondere eines Raubtiergesichts nachempfunden. Auf diese Weise können leuchtende Konturen eines Tiergesichts erzeugt werden. Die Schlitze können auch in Kombination mit den Markierungen und/oder mit der dreidimensionalen Struktur eingesetzt werden, um die Imitation eines Raubtiergesichts zu verbessern. Daher ist es bei einer bevorzugten Ausführungsform der erfindungsgemäßen Vorrichtung vorgesehen, dass das Gehäuse mindestens einen Schlitz, vorzugsweise in Form einer Kontur eines Tiergesichts, insbesondere eines Raubtiergesichts, aufweist, durch den Licht aus dem Gehäuse nach außen treten kann.

Die erfindungsgemäße Vorrichtung eignet sich zur Montage auf Einrichtungen neben oder auf der Fahrbahn, wie sie beispielsweise in § 57 der österreichischen Straßenverkehrsordnung beschrieben sind. Insbesondere eignet sich die erfindungsgemäße Vorrichtung zur Montage auf Leitpflöcken. Daher ist erfindungsgemäß ein Leitpflock vorgesehen, der mindestens eine erfindungsgemäße Vorrichtung umfasst.

Weiters ist es bei einer bevorzugten Ausführungsform des erfindungsgemäßen Leitpflocks vorgesehen, dass zwei Vorrichtungen vorgesehen sind, die übereinander angeordnet sind. D.h. die Vorrichtungen sind entlang einer Längsachse des Leitpflocks gesehen hintereinander angeordnet. Diese Anordnung erlaubt es insbesondere zwei Vorrichtungen zu verwenden, die nicht wesentlich breiter sind als der Leitpflock. Auf diese Weise kann einerseits ein sehr kompakter Ausbau realisiert werden. Andererseits kann gleichzeitig sichergestellt werden, dass Licht von Fahrzeugen aus beiden entgegengesetzten Fahrtrichtungen zur Anregung von lumineszierenden Körpern, die in den Raumbereich neben der Straße abstrahlen können, verwendet werden kann, indem die beiden Vorrichtungen Lichteintrittsöffnungen aufweisen, die gegenüberliegend angeordnet sind. D.h. die eine Vorrichtung kann das Licht von Fahrzeugen, die sich in der einen vorgesehenen Richtung auf der Straße bewegen, einfangen und die andere Vorrichtung das Licht von Fahrzeugen, die sich in der anderen vorgesehenen, entgegengesetzten Richtung auf der Straße bewegen.

Indem erfindungsgemäße Vorrichtungen zu beiden Seiten der Straße neben der Fahrbahn aufgestellt werden, kann das Wild von beiden Straßenseiten abgeschreckt bzw. verscheucht werden. Auf diese Weise lassen sich ganze Abschnitte von Straßen sichern. Entsprechend ist erfindungsgemäß ein Schutzabschnitt einer Straße vorgesehen, wobei neben einer Fahrbahn der Straße auf beiden Seiten der Straße erfindungsgemäße Vorrichtungen angeordnet sind.

Hierbei können die erfindungsgemaßen Vorrichtungen auf sämtlichen Einrichtungen angeordnet sein, die in § 57 der österreichischen Straßenverkehrsordnung beschrieben sind, insbesondere auf Leitpflöcken. Daher ist es bei einer bevorzugten Ausführungsform des erfindungsgemäßen Schutzabschnitts vorgesehen, dass erfindungsgemäße Leitpflöcke vorgesehen sind.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine axonometrische Ansicht eines Leitpflocks, an dem übereinander zwei erfindungsgemaße Vorrichtungen zum Abschrecken von Tieren angeordnet sind
- Fig. 2: eine schematische Darstellung eines Schutzabschnitts einer Straße in Aufsicht mit Leitpflöcken aus Fig. 2
- Fig. 3: eine Frontansicht einer weiteren Ausführungsform einer erfindungsgemaßen Vorrichtung mit einer Bemalung
- Fig. 4: eine axonometrische Ansicht der Vorrichtung aus Fig. 3 ohne Bemalung
- Fig. 5: einen Ausschnitt einer Schnittansicht der Vorrichtung aus Fig. 3, wobei die Schnittebene normal auf die Zeichenebene der Fig. 3 steht

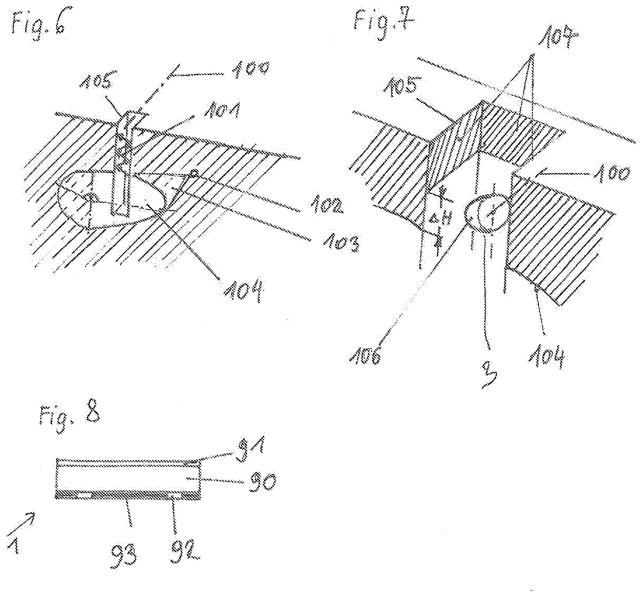

Fia. 6 und 7 Details einer weiteren Ausführungsform der Erfindung sowie Fig. 8 ein Schnitt durch eine weitere Ausführungsform der Erfindung.

### WEGE ZUR AUSFÜHRUNG DER ERFINDUNG

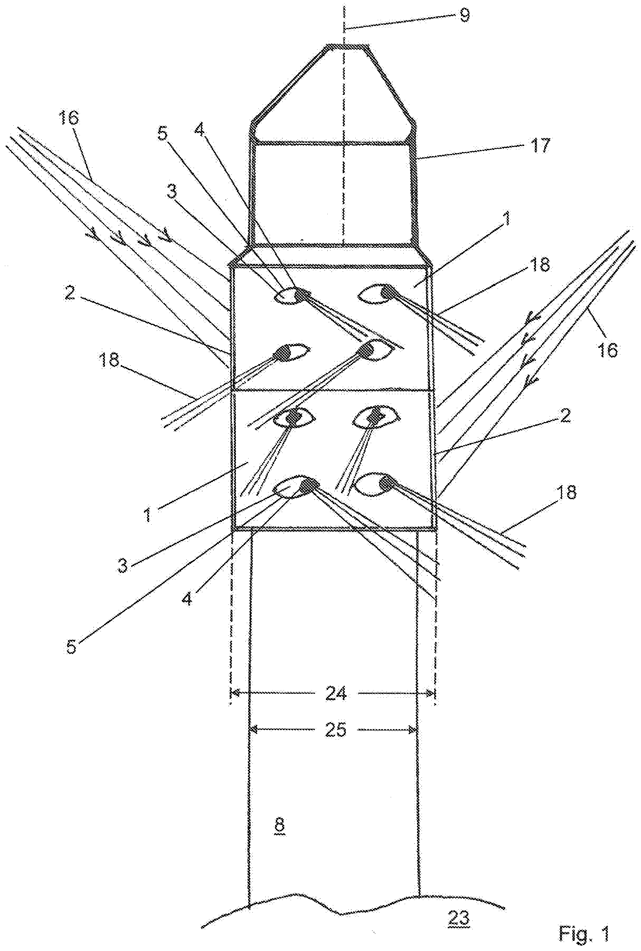

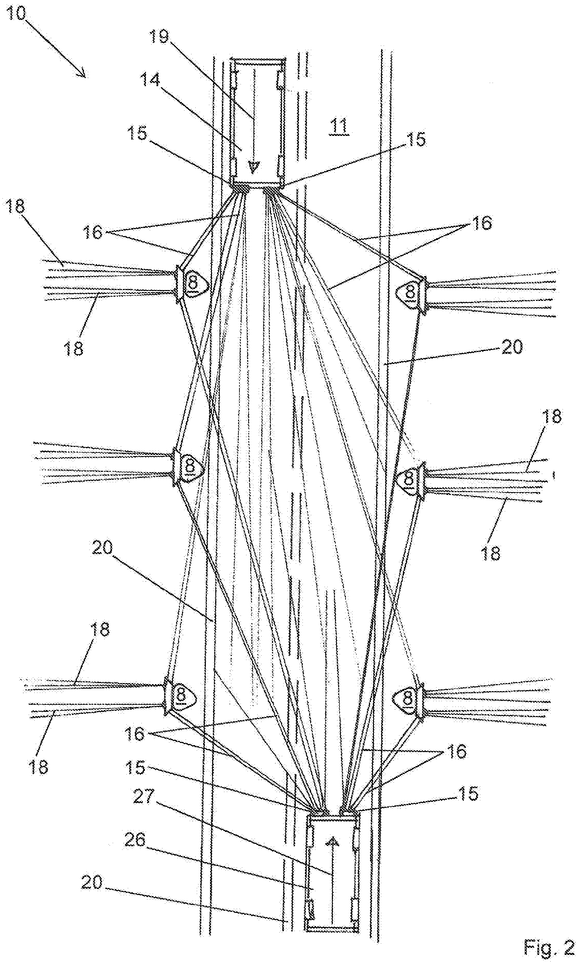

In der axonometrischen Ansicht der Fig. 1 ist ein Leitpflock 8 dargestellt, der grundsätzlich zur besseren Kenntlichmachung des Verlaufs einer Straße 10 vorgesehen ist, indem der Leitpflock 8 neben einer Fahrbahn 11 der Straße angebracht wird, vgl. auch Fig. 2. Der Leitpflock 8 ist im Boden 23 verankert und erstreckt sich über dem Boden 23 entlang seiner Längsachse 9 mit einer Länge bzw. Höhe von typischerweise ca. 90 cm. An seiner Spitze bzw. seinem freien Ende ist der Leitpflock 8 mit einer Abdeckung 17 versehen. Unter der Abdeckung sind zwei erfindungsgemäße Vorrichtungen zum Abschrecken von Tieren bzw. Wild erkennbar. Die Vorrichtungen sind übereinander bzw. entlang der Längsachse 9 gesehen hintereinander angeordnet.

Jede Vorrichtung weist ein Gehäuse 1 auf, das eine maximale Breite 24 hat, die nur geringfügig größer ist als die Breite 25 des Leitpflocks 8, die typischerweise ca. 10 cm beträgt. Somit steht die Vorrichtung seitlich nicht wesentlich vom Leitpflock 8 ab, und insgesamt ergibt sich ein kompakter Aufbau.

Jede Vorrichtung bzw. jedes Gehäuse 1 weist ein Lichteinlasselement in Form eines lichtdurchlässigen Bauteils 2, vorzugsweise aus Plexiglas, auf, durch welches Licht von außen in das jeweilige Gehäuse 1 eintreten kann. Die beiden lichtdurchlässigen Bauteile 2 sind dabei an einander gegenüberliegenden Seiten der Gehäuse 1 angeordnet bzw. liegen einander gegenüber. Somit kann Licht, das aus einer Richtung in das eine Gehäuse 1 eintritt, nicht auch in das andere Gehäuse 1 eindringen und umgekehrt. Dies ist insbesondere dann erwünscht, wenn der Leitpflock 8 bestimmungsgemäß am Rand der Straße 10, neben der Fahrbahn 11 aufgestellt ist und die Gehäuse 1 in einen Raum neben der Straße 10 weisen, in welchem sich potentiell Tiere aufhalten, die abgeschreckt bzw. verscheucht werden sollen. Dann nämlich kann in das eine Gehäuse 1 nur Licht von Fahrzeugen bzw. von deren Schweinwerfern, die sich auf der Straße 10 in einer Richtung bewegen, eintreten, wohingegen in das andere Gehäuse 1 nur Licht von Fahrzeugen treten kann, die sich auf der Straße 10 in der anderen, entgegengesetzten Richtung bewegen.

In Fig. 2 ist dieser Sachverhalt aus der Vogelperspektive für einen Schutzabschnitt der Straße 10 gezeigt, wobei im Schutzabschnitt entlang der Straße 10, neben der Fahrbahn 11, zu beiden Seiten der Straße 10 Leitpflöcke 8 wie aus Fig. 1 angeordnet sind. Die Fahrbahn 11 bzw. Fahrstreifen auf der Fahrbahn 11 sind durch Bodenmarkierungen 20 gekenntzeichnet. Ein erstes Auto 14 fährt in Richtung 19, wobei Licht 16 von dessen Scheinwerfern 15 emittiert wird, das auf jedem Leitpflock 8 nur in ein Gehäuse 1 eintritt. Licht 16, das von den Scheinwerfern 15 eines zweiten Autos 26 emittiert wird, tritt auf jedem Leitpflock 8 nur in das jeweils andere Gehäuse 1 ein, wobei das zweite Auto 26 in eine Richtung 27 fährt, die im Wesentlichen der Richtung 19 entgegengesetzt ist.

Wie in Fig. 1 und Fig. 2 erkennbar ist, weist der Leitpflock 8 einen Querschnitt auf, der im Wesentlichen die Form eines Dreiecks hat. In der Ansicht der Fig. 2 ist außerdem erkennbar, dass die lichtdurchlässigen Bauteile 2 bzw. jene Seiten der Gehäuse 1, die die lichtdurchlässigen Bauteile 2 aufweisen, nicht über gedachte Verlangerungen der Seiten dieses Dreiecks hinausragen und vorzugsweise im Wesentlichen parallel zu Seiten des Dreiecks verlaufen. Einerseits wird auf diese Weise die Kompaktheit des gesamten Aufbaus verstärkt. Andererseits wird sichergestellt, dass die lichtdurchlässigen Bauteile 2 durch den Leitpflock 8 bzw. durch dessen Seiten nicht verdeckt werden, wodurch Licht 16 möglichst ungehindert in die Gehäuse 1 eintreten kann.

Zur Abschreckung von Tieren weist jede Vorrichtung mehrere lumineszierende Elemente 4 auf, die in und/oder über Austrittsöffnungen 3 der Gehäuse 1 angeordnet sind. Die lumineszierenden Elemente 4 werden durch das in das jeweilige Gehäuse 1 eingetretene Licht 16 angeregt und strahlen Licht 18 ab. Dabei sind die lumineszierenden Elemente 4 so angeordnet, dass das Licht 18 stets in den Raum neben der Straße 10 abgestrahlt wird, wo sich abzuschreckende Tiere potentiell aufhalten, wobei das lumineszierende Element 4 aus einem im Wesentlichen blau emittierendes Lumineszenzmaterial gebildet ist.

Die lumineszierenden Elemente 4 bzw. die Austrittsöffnungen 3 sind jeweils paarweise angeordnet, wobei die lumineszierenden Elemente 4 bzw. die Austrittsöffnungen 3 eines Paares einen Abstand zueinander aufweisen, der 40 mm bis inklusive 120 mm beträgt. Dies ist ein Abstand, der typischerweise dem Abstand der Augen eines Fuchses bzw. eines Raubtieres entspricht. Die Licht 18 abstrahlenden lumineszierenden Elemente 4 sollen auf diese Weise leuchtende Raubtieraugen bzw. Fuchsaugen imitieren, um eine besonders abschreckende Wirkung auf Tiere im Raum neben der Straße 10 auszuüben.

Um diesen Effekt weiter zu verstärkern, weisen Umrandungslinien 5 der Austrittsöffnungen 3 eine Augenform, vorzugsweise die Form von Fuchsaugen, auf. Diese ergibt sich im Wesentlichen durch die Verschneidung einer konkaven mit einer konvexen Linie, wie in Fig. 1 gut erkennbar ist.

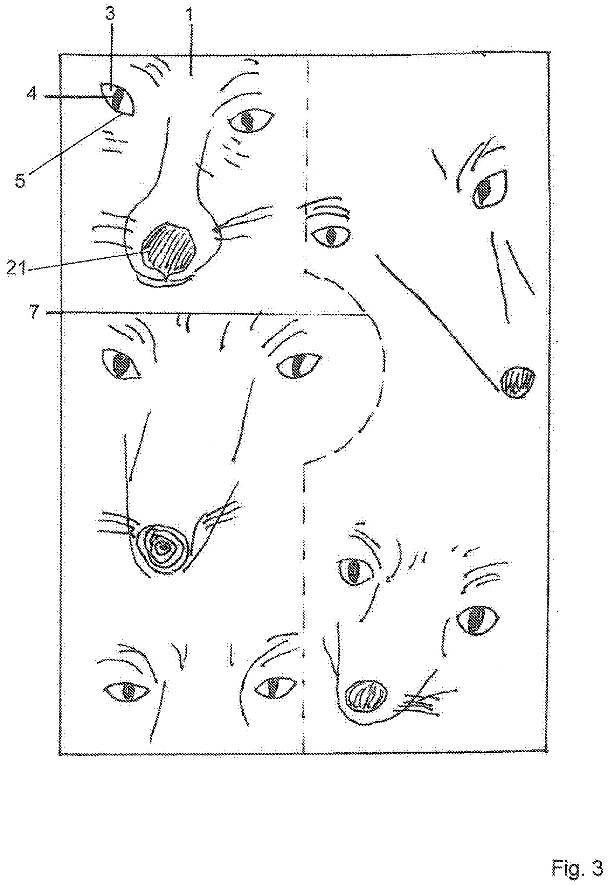

Die Erweckung des Eindrucks eines Raubtieres bzw. von Raubtieraugen kann weiter verstärkt werden, indem die Gehäuse 1 entsprechend bemalt werden. Fig. 3 zeigt eine weitere Ausführungsform der erfindungsgemäßen Vorrichtung, wobei das Gehäuse 1 eine Bemalung 21 mit Darstellungen von Fuchsköpfen aufweist, deren Augen durch Austrittsöffnungen 3 und lumineszierende Elemente 4 gebildet werden.

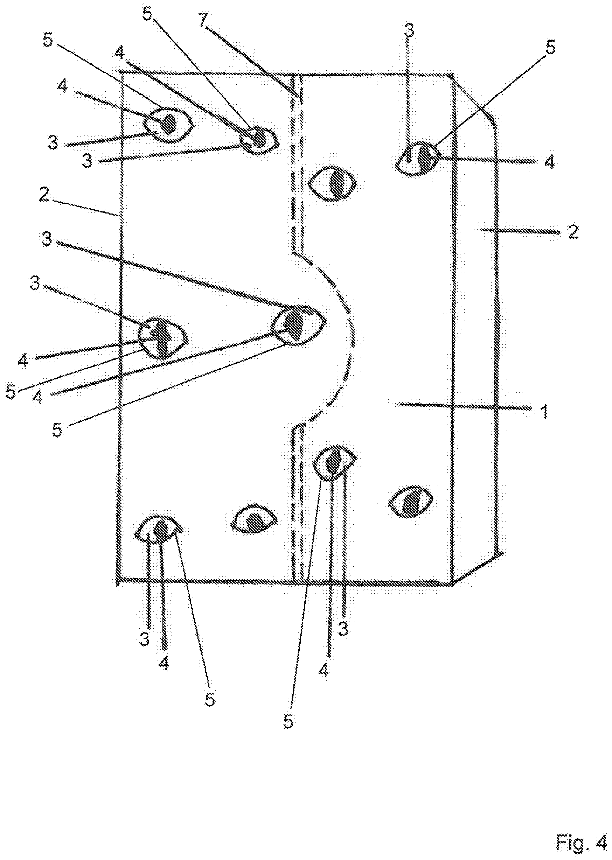

Die in Fig. 3 gezeigte Ausführungsform, die in Fig. 4 ohne Bemalung 21 dargestellt ist, zeichnet sich insbesondere dadurch aus, dass in einem Gehäuse 1 zwei einander gegenüberliegende lichtdurchlässige Bauteile 2 vorgesehen sind. Dies ermöglicht den Eintritt von Licht 16 aus zwei entgegengesetzten Richtungen.

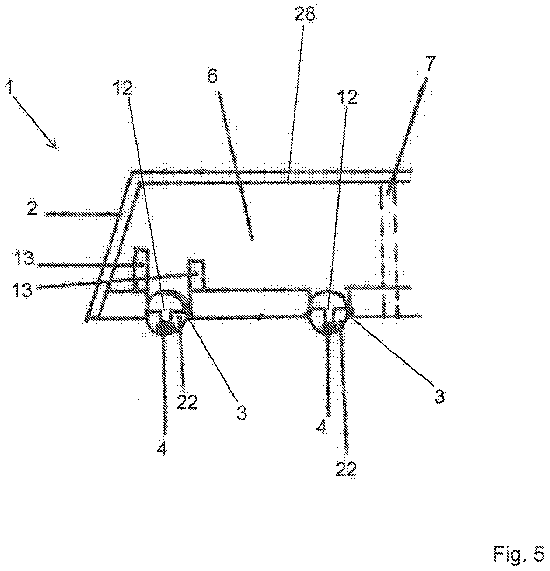

Das Gehäuse 1 umschließt grundsätzlich einen Hohlraum 6 (vgl. Fig. 5), in dem sich das einfallende Licht 16 ungehindert ausbreiten kann und/oder insbesondere an Innenwänden 28 des Gehäuses 1 reflektiert wird. Um in diesem Fall auszuschließen, dass Licht 16, das durch den einen lichtdurchlässigen Bauteil 2 in das Gehäuse 1 eingetreten ist, so zurück reflektiert wird, dass es durch denselben lichtdurchlässigen Bauteil 2 wieder austritt - und damit möglicherweise den Fahrer des Fahrzeugs 14, 26 blendet, das das Licht 12 abgestrahlt hat - oder dass es durch den gegenüberliegende lichtdurchlässigen Bauteil 2 austritt - und damit möglicherweise den Fahrer eines entgegenkommenden Fahrzeugs 26, 14 blende -, ist es vorgesehen, dass zwischen den einander gegenüberliegenden Bauteilen 2 eine lichtundurchlässige Wand 7 angeordnet ist, die Licht im Wesentlichen nicht reflektiert.

Um den Eindruck eines Raubtieres und damit den abschreckenden Effekt weiter zu verstärken, sind Lichtsteuerelemente vorgesehen. Diese bewirken, dass die lumineszierenden Elemente 4 nicht völlig gleich Licht 18 Abstrahlen, sondern insbesondere etwas zeitversetzt. Hierdurch soll ein besonders lebendiger Eindruck erzeugt werden bzw. die Augen eines lebendigen Raubtieres limitiert werden. Solche Lichtsteuerelemente bzw. deren Funktionsweise werden im Folgenden anhand von Fig. 5 erläutert. In der Schnittansicht der Fig. 5 ist ein Teil der Vorrichtung aus Fig. 3 dargestellt, wobei die Schnittebene normal auf die Zeichenebene der Fig. 3 steht. Sämtliche Ausführungen betreffend die Lichtsteuerelemente gelten jedoch ebenso für alle anderen Ausführungsformen der erfindungsgemäßen Vorrichtung, d.h. die Lichtsteuerelemente können in jeder Ausführungsform der erfindungsgemäßen Vorrichtung eingesetzt werden.

Gemäß Fig. 5 fungieren, insbesondere Kanäle 12 und Vorsprünge 13 als Lichtsteuerelemente, um Licht 16 den lumineszierenden Körpern 4 gezielt zuzuführen. Aber auch reflektierende Innenwände 28 können grundsätzlich als Lichtsteuerelemente verwendet werden. Die Lichtsteuerelemente bewirken, dass Licht 16, das von einem sich nähernden Fahrzeug 14, 26 abgestrahlt wird, nicht exakt gleichzeitig sämtliche lumineszierenden Körper 4 im Gehäuse 1 anregt.

So regt das vom sich nähernden Fahrzeug 14, 26 abgestrahlte Licht, 16, das unter einer gewissen Eintrittsrichtung durch den lichtdurchlässigen Bauteil 2 und in das Gehäuse 1 tritt, einen gewissen lumineszierenden Körper 4 zum Abstrahlen an - in der Darstellung der Fig. 5 z.B. den rechten lumineszierenden Körper 4. Der lumineszierende Körper 4 ist mittels einer grundsätzlich lichtundurchlässigen Halterung 22 über der Austrittsöffnung 3 fixiert. Die Halterung 22 weist einen Kanal 12 auf, durch den das den lumineszierenden Körper 4 anregende Licht 16 zu diesem gelangt. Vorzugsweise wurde das Licht 16 dabei im Gehäuse 1 an der Innenwand 28 reflektiert.

Gleichzeitig verhindern die Vorsprünge 13, dass Licht 16 zum anderen lumineszierender Körper 4 - in der Darstellung der Fig. 5 der linke lumineszierende Körper 4 - gelangen kann und diesen anregt. Die Vorsprünge 13 sind und beschatten auf diese Weise den linken lumineszierenden Körper 4 bzw. den zu diesem führenden Kanal 12.

Erst wenn sich das Fahrzeug 14, 26 weiter genähert hat und sich so der Winkel des eingestrahlten Lichts 16 relativ zum lichtdurchlässigen Bauteil 2 bzw. zum Gehäuse 1 hinreichend geändert hat und das Licht 16 nun unter einer anderen Eintrittsrichtung einfällt, gelangt das so eingestrahlte Licht 16 auch zum anderen, linken lumineszierenden Körper 4, der nun seinerseits zum Abstrahlen angeregt wird. Im Beispiel wird also Licht 16, das unter der anderen Eintrittsrichtung einfällt, durch die Vorspränge 13 nicht oder zumindest nicht vollständig abgeblockt und kann das andere, linke lumineszierende Element 4 zum Abstrahlen anregen. Selbstverständlich kann auch in diesem Fall das Licht 16 an der Innenwand 28 reflektiert worden sein oder können auch hierbei, weitere Lichtsteuerelemente im Spiel sein. Insgesamt ergibt sich somit ein zeitversetztes Aufleuchten der lumineszierenden Elemente 4, wobei im gezeigten Ausführungsbeispiel zuerst das rechte lumineszierende Element 4 Licht 18 abstrahlt und dann der linke lumineszierende Körper 4.

Das lumineszierende Element 4 kann fluoreszierend oder phosphoreszierend seit und es kann so gestaltet sein, dass es nach der Anregung durch Licht nachleuchtet.

Weiters kann vorgesehen sein, dass die Austrittsöffnung 3 die Größe und/oder Form zumindest eines Tierauges aufweist.

Im Ausfuhrungsbeispiel gemäß Fig. 6 und 7 sind im Gehäuse 1 parallele halbreflektierende Seitenwände 105 vorgesehen, die z. B. durch eine Nut in einem transparenten Material ausgebildet sind, die im Wesentlichen normal zur Eintrittsrichtung des eintretenden Lichts orientiert sind, wobei eine Lichtquelle 2 eines (nicht dargestellten) Fahrzeuges einen Lichtkegel 103 erzeugt und 104 der Schnitt des Lichtkegels mit der angeleuchteten Fläche ist. Die Austrittsöffnung 3 ist zwischen den halbreflektierenden Seitenwänden 105 und gegenüber dem eintretenden Licht um ΔH nach oben höhenversetzt angeordnet.

Auf diese Weise kann eine Höhenversetzung des austretenden Lichtes erreicht werden, um das austretende Licht an einer höheren Stelle als das eintretende Licht 103 auf ein lumineszierendes Element 106 auftreffen und das emittierte blaue Licht aus dem Gehäuse 1 austreten zu lassen. Der eintretenden Lichtstrahl wird dabei jeweils an der Innenseite der Seitenwände 105 nach oben reflektiert, Durch die Mahl der Rauigkeit der Handflächen 105 kann festgelegt werden, welches Ausmaß an Lichtintensität an der Austrittsöffnung 3 austritt.

Ergänzend wird zu Fig.5 bemerkt, dass in der dort gezeigten gezeigten Ausführungsform eine erste und eine zweite Austrittsöffnung 3 vorgesehen ist, und im Gehäuse 1 sind lichtundurchlässige Vorsprünge 13 nur im Bereich der zweiten Austrittsöffnung 3 vorgesehen sind, um das innerhalb eines vorbestimmten Winkelbereiches in das Gehäuse 1 eintretenden Licht von der zweiten Austrittsdffnung 3 abzublocken. Auf diese Weise kann ein zeitversetztes Aufleuchten der beiden Austrittsöffnungen 3 und damit ein bewegter Ausdruck für ein im Sichtbereich vorhandenen Tiers erzeugt werden.

Das Gehäuse 1 weist dabei eine Innenwand 28 auf, an der das in das Gehäuse 1 eintretende Licht 1 reflektiert oder gestreut wird.

Eine weitere Ausführungsform der Erfindung kann darin bestenen, dass das lumineszierende Element durch eine lumineszierende Schicht ausgebildet ist, die innerhalb des Gehäuses 1 angeordnet ist.

Fig.8 zeigt eine weitere Ausführungsform der erfindungsgemäßen Vorrichtung, bei der Austrittsöffnungen 92 im Gehäuse 1 vorgesehen sind, und das lumineszierende Element 91 durch eine im blauen Wellenlängenbereich des Lichtes emittierende lumineszierende Schicht ausgebildet ist, die so angeordnet ist, dass das von der lumineszierenden Schicht 91 abgestrahlte Licht zumindest teilweise durch die beiden Austrittsöffnung 92 aus dem Gehäuse 1 austritt. Die vom eintretenden Licht angeregte lumineszierende Schicht 91 emittiert im Wesentlichen blaues Licht, also im Wellenlängenbereich von ca. 420-490 nm, und leuchtet einige Sekunden nach, wodurch der abschreckende Effekt verstärkt wird.

Die Abstände der beiden Austrittsöffnungen 92 können dem Abstand von Tieraugen entsprechend ausgeführt sein.

## Patentansprüche

1. Vorrichtung zum Abstrahlen von Licht zur Abschreckung von Tieren, mit einem Gehäuse. (1), das mindestens ein Lichteinlasselement (2) umfasst, durch welches Licht (16) in einer Eintrittsrichtung von außen in das Gehäuse (1) eintreten kann, und mindestens einem Lichtabstrahlelement (4, 91), durch welches Licht vom Gehäuse (1) in einer Abstrahlrichtung abgestrahlt werden kann, wobei die Abstrahlrichtung vom Gehäuse weg weist und nur quer zur Eintrittsrichtung ist, **dadurch gekennzeichnet, dass** das mindestens eine Lichtabstrahlelement ein lumineszierendes Element (4, 91) umfasst, das durch Licht (16), das durch das mindestens eine Lichteinlasselement (2) in dass Gehäuse (1) eintritt, zur Abstrahlung von Licht (18) in Abstrahlrichtung anregbar ist, und dass das lumineszierende Element (4, 91) aus einem im Wesentlichen blau emittierenden Lumineszenzmaterial gebildet ist.

2. Vorrichtung nach Anspruch 1, **dadurch gekennzeichnet, dass** das lumineszierende Element fluoreszierend oder phosphoreszierend ist.

3. Vorrichtung nach Anspruch 1 oder 2, **dadurch gekennzeichnet, dass** das lumineszierendes Element (4) nachleuchtet.

4. Vorrichtung nach Anspruch 1, 2 oder 3, **dadurch gekennzeichnet, dass** zumindest eine Austrittsöffnung (92) im Gehäuse (1) vorgesehen ist, und dass das lumineszierendes Element (91) durch eine lumineszierende Schicht ausgebildet ist, die so angeordnet ist, dass dass von der lumineszierenden Schicht abgestrahlte Licht zumindest teilweise durch die zumindest eine Austrittsöffnung (92) aus dem Gehäuse (1) austritt.

5. Vorrichtung nach Anspruch 1, 2 oder 3, **dadurch gekennzeichnet, dass** zumindest eine Austrittsöffnung (3) im Gehäuse (1) vorgesehen ist, in und/oder über welcher das lumineszierende Element (4) zumindest abschnittsweise angeordnet ist.

6. Vorrichtung nach Anspruch 4 oder 5, **dadurch gekennzeichnet, dass** die zumindest eine Austrittsöffnung Größe und/oder Form zumindest eines Tierauges aufweist.

7. Vorrichtung nach Anspruch 6, **dadurch gekennzeichnet, dass** die zumindest eine Austrittsöffnung (3) eine Umrandungslinie aufweist, die die Form einer konkaven Linie, die mit einer konvexen Linie verschnitten ist, aufweist.

8. Vorrichtung nach Anspruch 5, 6 oder 7, **dadurch gekennzeichnet, dass** zwei oder mehrere Austrittsöffnungen (3) mit zugeordneten lumineszierenden Elementen (4) ausgebildet sind, wobei die lumineszierenden Elemente (4) einen relativen Abstand zueinander aufweisen, der 40 mm bis inklusive 120 mm beträgt.

9. Vorrichtung nach einem der Ansprüche 5 bis 8, **dadurch gekennzeichnet, dass** im Gehäuses. (1) parallele halbreflektierende Seitenwände (105) vorgesehen sind, die normal zur Eintrittsrichtung des eintretenden Lichts orientiert sind, und dass die zumindest eine Austrittsöffnung (3) zwischen den halbreflektierenden Seitenwänden (105) und um ΔH nach oben höhenversetzt gegenüber dem eintretenden Licht angeordnet ist.

10. Vorrichtung nach einem der Ansprüche 5 bis 9, **dadurch gekennzeichnet, dass** eine erste und eine zweite Austrittsöffnung (3) vorgesehen sind, und dass im Gehäuse (1) lichtundurchlässige Vorsprünge (13) nur im Bereich der zweiten Austrittsöffnung (3) vorgesehen sind, um das innerhalb eines vorbestimmten Winkelbereiches in das Gehäuse (1) eintretende Licht von der zweiten Austrittsöffnung (3) abzublocken.

11. Vorrichtung nach einem der Ansprüche 5 bis 10, **dadurch gekennzeichnet, dass** das lumineszierende Element (4) mittels einer lichtundurchlässigen Halterung (22) über der zumindest einen Austrittsöffnung (3) fixiert ist, und dass die Halterung (22) einen Kanal (12) aufweist, durch den das das lumineszierende Element (4) anregende Licht (16) zu diesem gelangt.

12. Vorrichtung nach einem der vorhergehender ansprüche 1 bis 11, **dadurch gekennzeichnet, dass** das Gehäuse (1) zumindest eins Innenwand (28) aufweist, an der das in das Gehäuse (1) eintretende Licht (16) reflektiert oder gestreut wird.

13. Vorrichtung nach einem der vorhergehenden Ansprüche 1 bis 12, **dadurch gekennzeichnet, dass** das lumineszierende Element (4) durch eine lumineszierendes Schicht ausgebildet ist, die innerhalb des Gehäuses (1) angeordnet ist.

## Claims

1. A device for emitting light to scare off animals comprising a housing (1) which comprises at least one light inlet element (2) through which light (16) is able to enter the housing (1) from outside in an entry direction and at least one light emitting element (4, 91) through which light may be emitted from the housing (1) in an emission direction, said emission direction pointing away from the housing only transversely to the entry direction, **characterized in that** said at least one light emitting element comprises a luminescent element (4, 91) which may be excited to emit light (18) in the emission direction by light (16) entering the housing (1) through said at least one light inlet element (2) and **in that** said luminescent element (4, 91) is formed of a luminescent material emitting essentially blue light.

2. The device according to claim 1, **characterized in that** said luminescent element is fluorescent or phosphorescent.

3. The device according to claim 1 or claim 2, **characterized in that** said luminescent element (4) emits an afterglow.

4. The device according to claim 1, 2, or 3, **characterized in that** at least one outlet opening (92) is provided in the housing (1) and **in that** said luminescent element (91) is formed by a luminescent layer which is arranged in a way that at least a portion of the light emitted by said luminescent layer exits through said outlet opening (92) out of the housing (1).

5. The device according to claim 1, 2, or 3, **characterized in that** at least one outlet opening (3) in and/or above which said at least portions of said luminescent element (4) are arranged is provided in the housing (1).

6. The device according to claim 4 or claim 5, **characterized in that** said at least one outlet opening has the size and/or shape of at least one animal eye.

7. The device according to claim 6, **characterized in that** said at least one outlet opening (3) has a border line which has the shape of a concave line intersecting a convex line.

8. The device according to claim 5, 6, or 7, **characterized in that** two or more outlet openings (3) are formed with associated luminescent elements (4), said luminescent elements (4) being spaced apart by a relative distance of 40 mm to 120 mm (incl.).

9. The device according to any one of the claims 5 to 8, **characterized in that** parallel semi-reflective side walls (105) which are arranged orthogonally to the entry direction of the entering light are provided in the housing (1) and **in that** said at least outlet opening (3) is arranged between said semi-reflective side walls (105) and are offset by ΔH in the height direction from the entering light.

10. The device according to any one of the claims 5 to 9, **characterized in that** a first and a second outlet opening (3) are provided and **in that** opaque projections (13) are provided only in the area of said second outlet opening (3) in order to block light entering the housing (1) from said second outlet opening (3) within a predefined angular range.

11. The device according to any one of the claims 5 to 10, **characterized in that** said luminescent element (4) is fixed above said at least one outlet opening (3) by means of an opaque mount (22) and **in that** said mount (22) has a channel (12) through which the light (16) exciting said luminescent element (4) may reach said luminescent element (4).

12. The device according to any one of the claims 1 to 11, **characterized in that** said housing (1) has at least one internal wall (2) which reflects or scatters the light (16) entering the housing (1).

13. The device according to any one of the claims 1 to 12, **characterized in that** said luminescent element (4) is formed by a luminescent layer arranged within the housing (1).

## Revendications

1. Dispositif pour émettre de la lumière pour repousser des animaux, comprenant un boîtier (1), qui comporte au moins un élément (2) d'entrée de lumière, à travers lequel de la lumière (16) peut entrer depuis l'extérieur dans une direction d'entrée, et au moins un élément (4, 91) d'émission de lumière, par lequel de la lumière peut être émise dudit boîtier (1) dans une direction d'émission, la direction d'émission partant du boîtier et étant uniquement transversale à la direction d'entrée, **caractérisé en ce que** ledit au moins un élément d'émission comprend un élément (4, 91) luminescent, qui peut être excité, par de la lumière (16) entrant dans le boîtier à travers l'au moins un élément (2) d'entrée de lumière, à émettre de la lumière (18) dans la direction d'émission, et **en ce que** ledit élément (4, 91) luminescent est formé d'une matière émettant essentiellement une lumière bleue.

2. Dispositif selon la revendication 1, **caractérisé en ce que** ledit élément (4) luminescent est fluorescent ou phosphorescent.

3. Dispositif selon les revendications 1 ou 2, **caractérisé en ce que** ledit élément (4) luminescent a une luminescence résiduelle.

4. Dispositif selon l'une quelconque des revendications 1, 2 ou 3, **caractérisé en ce que** l'au moins un orifice (92) de sortie est prévu dans ledit boîtier et **en ce que** ledit élément (91) luminescent est formé par une couche luminescente, qui est disposée de telle manière à ce qu'au moins une partie de la lumière émise par ladite couche luminescente sorte dudit boîtier (1) à travers ledit orifice (92) de sortie.

5. Dispositif selon l'une quelconque des revendications 1, 2 ou 3, **caractérisé en ce que** ledit au moins un orifice (3) de sortie est prévu dans ledit boîtier (1), dans le/au-dessus duquel sont disposées au moins des sections de l'élément (4) luminescent.

6. Dispositif selon les revendications 4 ou 5, **caractérisé en ce que** ledit au moins un orifice de sortie a la dimension et/ou la forme d'au moins un oeil d'animal.

7. Dispositif selon la revendication 6, **caractérisé en ce que** ledit au moins un orifice (3) de sortie a une ligne de contour, qui a la forme d'une ligne concave croisant une ligne convexe.

8. Dispositif selon les revendications 5, 6 ou 7, **caractérisé en ce que** deux ou plus orifices (3) de sortie sont formés avec des éléments luminescents associés, lesdits éléments (4) associés ayant un écart relatif entre eux, qui est compris entre 40 mm et 120 mm inclus.

9. Dispositif selon l'une quelconque des revendications 5 à 8, **caractérisé en ce que** dans ledit boîtier (1) sont prévues des parois (105) latérales semi-réfléchissantes, qui sont orientées de façon perpendiculaire à la direction d'entrée de la lumière entrante, et **en ce que** ledit au moins un orifice (3) de sortie est disposé entre lesdites parois (105) semi-réfléchissantes et décalé en hauteur de ΔH vers le haut par rapport à la lumière entrante.

10. Dispositif selon l'une quelconque des revendications 5 à 9, **caractérisé en ce qu'**un premier et un deuxième orifice (3) de sortie sont prévus et **en ce que** des protubérances (13) opaques (1) sont prévues, dans ledit boîtier, uniquement dans la région dudit deuxième orifice (3) de sortie pour bloquer la lumière, entrant dans ledit boîtier (1) sur une plage angulaire prédéfinie, dudit deuxième orifice (3) de sortie.

11. Dispositif selon l'une quelconque des revendications 5 à 10, **caractérisé en ce que** ledit élément (4) luminescent est fixé à travers un support (22) opaque au-dessus dudit au moins un orifice (3) de sortie, et **en ce que** ledit support (22) présente un canal (12), à travers lequel la lumière (16) excitant l'élément (4) luminescent arrive jusqu'à ce dernier.

12. Dispositif selon l'une quelconque des revendications 1 à 11, **caractérisé en ce que** ledit boîtier (1) a au moins une paroi (28) intérieure, sur laquelle la lumière (16) entrant dans le boîtier (1) est réfléchie ou diffusée.

13. Dispositif selon l'une quelconque des revendications 1 à 12, **caractérisé en ce que** ledit élément (4) luminescent est formé par une couche luminescente disposée à l'intérieur dudit boîtier (1).
